# EUROPEAN PATENT SPECIFICATION

(11) **EP 1 026 840 B1**
(45) Date of publication and mention of the grant of the patent: **03.04.2002**
(21) Application number: 99300842.4
(22) Date of filing: 04.02.1999
(51) Int. Cl.: H04B 10/135, H04L 27/32

(54) **Polarisation modulation for optical transmission**
Polarisationsmodulation für optische Übertragung
Modulation de polarisation pour transmission optique

(43) Date of publication of application: 09.08.2000
(73) Proprietor: LUCENT TECHNOLOGIES INC., Murray Hill, New Jersey 07974-0636 (US)
(72) Inventor: Rajan, Govinda Nallappa, 1273 CH Huizen (NL)
(74) Representative: Williams, David John

(56) References cited:
- WO-A-91/18455
- US-A- 5 742 418
- IVERSEN K ET AL: "SYSTEMGEWINN DURCH POLARISATIONSMODULATION BEI FASEROPTISCHEM CDMA" CODIERUNG FUR QUELLE, KANAL UND UBERTRAGUNG, VORTRAGE DER ITG-FACHTAGUNG, MUNCHEN, OCT. 26 -28, 1994, no. 130, 1 January 1994, pages 339-348, XP000503809 INFORMATIONSTECHNISCHE GESELLSCHAFT IM VDE (ITG)
- BENEDETTO S ET AL: "DIRECT DETECTION OF OPTICAL DIGITAL TRANSMISSION BASED ON POLARIZATION SHIFT KEYING MODULATION" IEEE JOURNAL ON SELECTED AREAS IN COMMUNICATIONS, vol. 13, no. 3, 1 April 1995, pages 531-542, XP000497889

## Description

### Field of the Invention

The present invention relates to the encoding of data for the transmission of data on an optical link using polarisation modulation, and specifically but not exclusively to such polarisation modulation in combination with known modulation techniques.

### Background to the Invention

The most commonly used technique for transmitting information using an optical link involves transmitting or not transmitting a light signal to represent a binary 1 or a binary 0. That is, a light source is switched on or off to represent a binary sequence. At the receiver, the presence or absence of light is detected to decode a binary sequence. In practice the light source is not switched off to represent a binary 0, but rather attenuated to a low level.

In a more advanced optical transmission arrangement, a light signal is polarised through a plurality of different angles, and each polarised component is modulated. Each polarised component thus forms a channel, and the system is a multi-channel system. The modulation technique for each channel may be amplitude, phase or frequency. At the receiver the optical signal is passed through polarisation filters (filters), and it is important that the signal values are not lost. In order to ensure the signal values are not lost complex techniques are applied which increase the systems expense. Such systems are still in the experimental stage.

It is therefore an object of the present invention to provide an optical communication system which employs a simple polarisation encoding technique.

It is known from US patent 5742418 to provide a method of transmitting information on a light signal, comprising: generating a light signal; and adjusting the polarisation value of the light signal to one of at least two values in dependence on one of at least two values of information to be transmitted.

### Summary of the Invention

The present invention is characterised over the disclosure of US 5742418 in that it comprises the step of further modulating the light signal in dependence on one of at least two values of further information to be transmitted. The present invention thus provides a simple polarisation modulation technique which is analogous to amplitude shift key (ASK) modulation, frequency shift key (FSK) modulation, and phase shift key (PSK) modulation. The polarisation modulation technique may be called polarisation shift key modulation (PolSK). The further modulation is in addition to the polarisation shift key modulation. The modulation step may comprise amplitude modulation. The invention also provides an optical transmitter comprising: a light source for generating a light signal; and polarisation adjustment means connected to receive the light signal and an information signal having one of at least two values, wherein the polarisation value of the light signal is adjusted to one of at least two values in dependence on the information signal, characterised in that the optical transmitter further comprises modulation means adapted to modulate the light signal in dependence on a further information signal. The modulation means may be an amplitude modulation means.

The invention also provides a method of receiving information, the information having been transmitted by means of a light signal having one of at least two polarisation values representing one of at least two information values, the method comprising detecting the polarisation value of the transmitted light signal the transmitted signal is additionally modulated in dependence on further information values, the method further comprising the step of demodulating the transmitted light signal prior to detecting the polarisation value of the transmitted signal.

The transmitted signal may be amplitude modulated, the method further comprising the step of amplitude demodulation of the light of the transmitted signal.

The invention also provides an optical receiver for receiving a light signal having one of at least two polarisation values, each polarisation value representing one of at least two values of information, comprising a polarisation detector connected to receive the light signal and for detecting the polarisation value of the light signal, characterised in that the light signal is further modulated by other means in dependence upon further information, the optical receiver further comprising a demodulator for the other modulation connected prior to the polarisation detector.

### Brief Description of The Drawings

Figure 1 illustrates one optical transmission system not in accordance with the present invention.
Figure 2 illustrates a further optical transmission scheme not in accordance with the present invention.
Figure 3 illustrates an implementation of an embodiment of the present invention utilising additional modulation techniques;
Figure 4 illustrates an implementation of the embodiment of Figure 3;
Figure 5 illustrates an alternative implementation of the embodiment of Figure 4; and
Figures 6(a) to 6(c) illustrate the transmitted signal at various stages of the transmission process in the implementations of Figures 4 and 5.

### Description of Preferred Embodiments

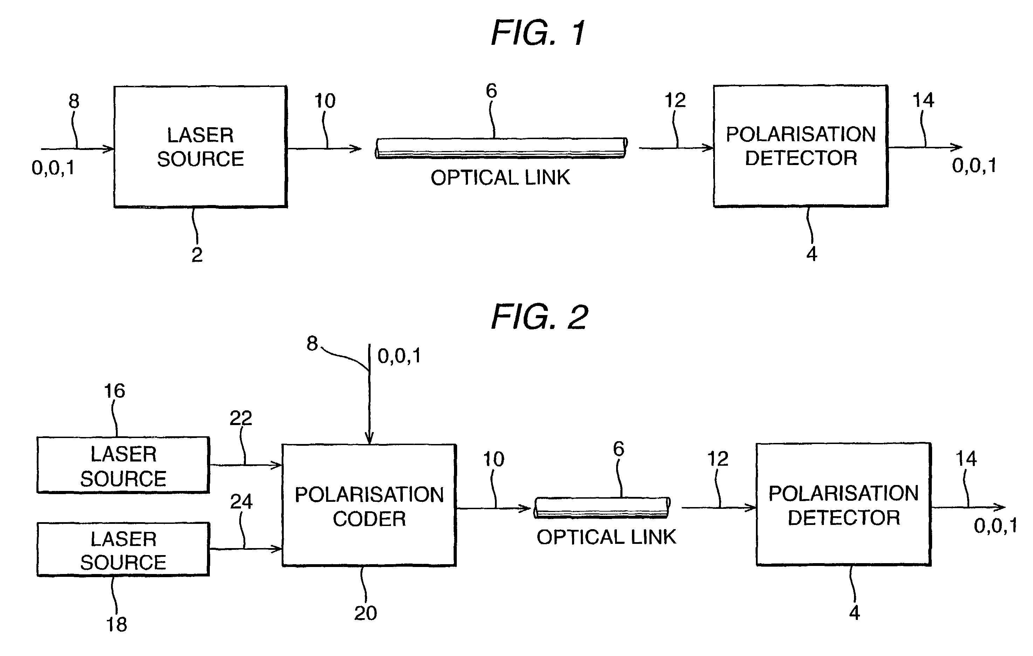

Referring to Figure 1 there is illustrated a schematic drawing of an optical transmission system. The optical transmission system includes a laser source 2 and a polarisation detector 4. In this simple schematic the laser source comprises the transmitter and the polarisation detector comprises the receiver.

The laser source 2 receives an information signal to be transmitted on an input signal line 8. In this example the information signal is the binary sequence 0,0,1. The laser source 2 is capable of generating a light signal having one of two polarisation values, preferably 0° and 90°. The laser source 2 operates responsive to the binary values on the input signal line such that the one of the two polarisation values is selected responsive to the one of the two binary values. Thus the laser source 2 outputs alight signal on the transmitter output on line 10 which has a polarity of 0° for a binary value of 0 and a polarity of 90° for a binary value of 1.

The transmitter output on line 10 is then transmitted on the optical link 6, such as an optical fibre, and received at the receiver at the receiver input on line 12. The receiver input on line 12 is connected to the polarisation detector 4 which is capable of detecting the polarisation value of the received signal. Thus the polarisation detector 4 detects a polarisation value of 0° or 90°, and responsive to these two polarisation values outputs a binary 0 or a binary 1 on the receiver output on line 14. Thus the receiver output on line 14 carries the binary sequence 0,0,1 corresponding to the binary sequence 0,0,1 on the transmitter input.

It can thus be appreciated that the laser source 2 generates a polarisation shift key modulated light signal, and the polarisation detector 4 functions as a demodulator for the polarisation shift key modulated signal.

It will be appreciated that some control means must be provided in both the transmitter and receiver for timing the signals. The implementation of this is outside the scope of the invention and will be well understood by one skilled in the art.

Referring to Figure 2, an alternative implementation of the transmitter is shown. In Figure 2 the transmitter includes a pair of laser sources 16 and 18 and a polarisation coder 20. Each of the laser sources 16 and 18 is capable of generating a light signal having a single polarisation value. For the purposes of this example the laser source 16 generates a light signal having a polarisation value of 0° on line 22 and the laser source 18 generates a light signal having a polarisation value of 90° on line 24. Each of the laser sources 16 and 18 continuously generate their respective light signals.

The polarisation coder 20 receives as inputs the two polarised light signals on lines 22 and 24, and also receives the information values to be transmitted on the input signal line 8. As in the example of Figure 1, the information values to be transmitted are the binary sequence 0,0,1. The polarisation coder acts on the light signals on lines 22 and 24 to select them onto the transmitter output in dependence on the current value of the information signal. Thus if the information value currently has the value binary 0 the light signal having a polarisation value of 0° is selected an output on the transmitter output on line 10. If the information signal currently has a value of binary 1 then the light signal having the polarisation value of 90° is selected and output on the transmitter output on line 10.

The polarisation encoder 20 of Figure 2 operates as a polarisation shift key modulator, and the polarisation detector 4 again functions as a demodulator.

For the same information signal values, the signal on the transmitter output line 10 is thus the same in Figures 1 and 2. The receiver is constructed identically in Figures 1 and 2, and the receiver of Figure 2 thus operates identically to that of Figure 1 to recover the information values 0,0,1 on the receiver output on line 14.

Thus it can be appreciated that the polarisation of the light signal is used to convey the information from the transmitter to the receiver. In this example the light signal may have one of two polarisation values and may thus conveniently be used to represent binary values. It will be appreciated that the light signal may be more carefully controlled to have one of more than two polarisation values to represent a greater number of information values.

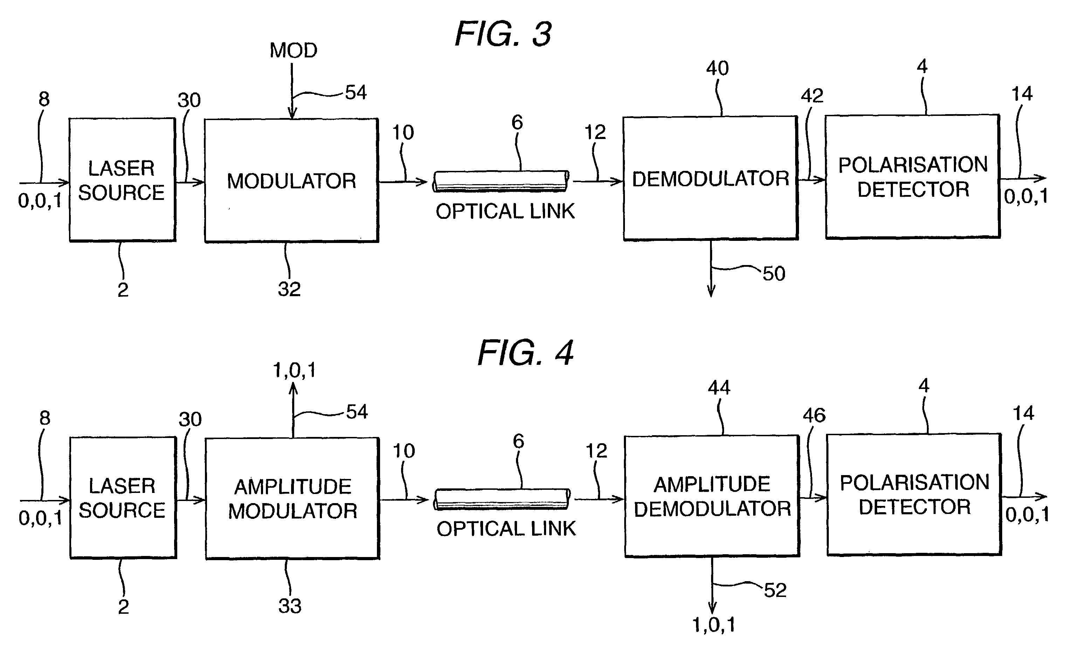

Referring now to Figure 3, there is shown a preferred embodiment of an optical communication system according to the present invention. The transmitter of Figure 3 is modified to include a modulator 32 in addition to the laser source 2. The receiver of Figure 3 is modified to include a demodulator 40 in addition to the polarisation detector 4 of Figure 1.

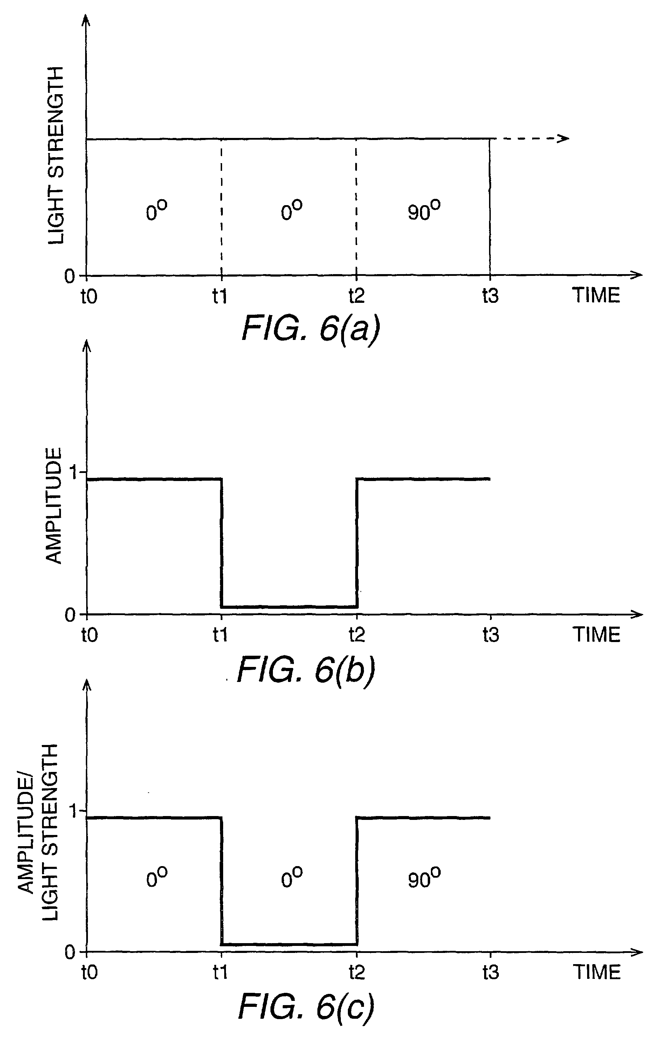

In the transmitter, the laser source is connected as in Figure 1 to receive the information signal on line 8, carrying the binary sequence 0,0,1 to be transmitted. The thus generated light signal having polarisation values of 0° and 90° corresponding to the binary values 0 and 1 is presented on an output signal line 30 to the modulator 30. The light signal on the line 30 is illustrated in Figure 6(a). As can be seen, the light signal has a polarity of 0°,0°,90° corresponding to the binary values 0,0,1 of the information signal on input line 8.

The modulator 32 receives the light signal of Figure 6(a) on line 30 and a modulation signal MOD on line 54. The modulation signal may represent any type of signal modulation, such as ASK, FSK, PSK. The modulator 32 modulates the signal on line 30 in accordance with the modulation signal MOD, and the thus modulated light signal is output on the transmitter output on line 10 and propagated in the optical link 6.

In the receiver, the transmitted signal is received on the input signal line on line 12 which is connected to the demodulator 40. The demodulator 40 demodulates the transmitted signal on line 12 and generates the demodulated signal on line 50. The demodulated signal is then presented additionally on line 42 to the polarisation detector 4. The polarisation detector 4 corresponds to the polarisation detector 4 of Figure 1 and generates the recovered information signal on line 14.

It can thus be understood from the foregoing description with reference to Figure 3 that the technique according to this preferred embodiment of the invention results in the transmission of two separate channels of data on the single light signal. One channel is represented by the polarisation encoding on the light signal, and the other channel is represented by the modulation of the light signal. Thus every pulse time period carries two channels of data.

The laser source generates a polarisation shift key modulated signal, and the polarisation detector demodulates the thus modulated signal.

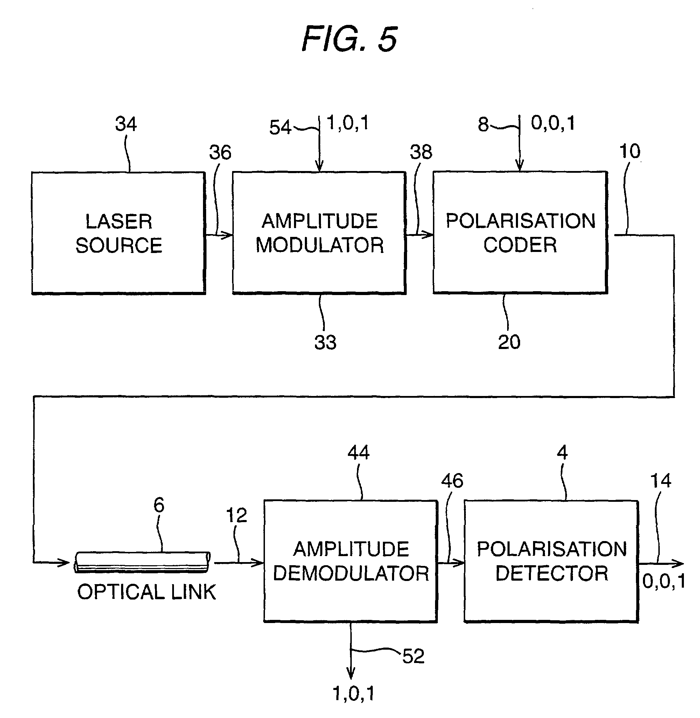

Referring now to Figure 4, a specific example of the optical transmission system of Figure 3 utilising amplitude modulation will now be described with further reference to Figure 5.

In Figure 4 the modulator 32 of Figure 3 is implemented as an amplitude modulator 33. The amplitude modulator 33 receives an amplitude modulation signal on the modulation input signal line 54. In this specific example the amplitude modulation signal is the binary sequence 1,0,1. The amplitude modulation sequence 1,0,1 on line 54 is illustrated in Figure 6(b). The output of the amplitude modulator on line 10 is illustrated in Figure 6(c). As can be seen, the transmitted signal is amplitude modulated and polarisation 'modulated', thus allowing two sets of information to be carried simultaneously on the same signal line.

At the receiver side, the transmitted signal shown in Figure 6(c) is received at the receiver input on line 12. The demodulator 40 of Figure 3 is implemented by an amplitude demodulator 44 which is connected to receive the transmitted signal on the receiver input 12. The amplitude demodulator amplitude demodulates the transmitted signal and outputs the demodulated signal on line 52. Thus the line 52 carries the binary sequence 1,0,1 representing the modulation applied to the transmitted signal. The amplitude demodulator also supplies the amplitude demodulated signal on line 46 to the polarisation detector 4. The polarisation detector 4, as before, detects the polarisation of the signal on line 46 and consequently generates the binary sequence 0,0,1 on line 14.

The laser source generates a polarisation shift key modulated signal, and the polarisation detector demodulates the thus modulated signal. Finally, referring to Figure 5, there is illustrated an alternative implementation of the transmitter of Figure 4. The transmitter of Figure 5 includes a laser source 34, an amplitude modulator 33 and a polarisation coder 20. The receiver implementation of Figure 5 corresponds identically to the receiver implementation of Figure 4.

The laser source 34 of Figure 5 generates a light signal, but differs from the laser source of Figure 4 in that it provides no control over the polarity of the light signal. The light signal thus generated on line 36 is input to the amplitude modulator 33 where the light signal is amplitude modulated by the signal sequence 1,0,1 on input line 54 as before. The thus amplitude modulated signal is output on line 38 to the polarisation coder 20. The polarisation coder 20 also receives the information signal on line 8 carrying the binary sequence 0,0,1 and modifies the polarisation of the modulated light signal in dependence on this information signal. Thus the signal to be transmitted on line 10 corresponds to the signal on line 10 of Figure 4 and the signal shown in Figure 6(c). The difference between Figures 4 and 5 is the order in which the modulation and polarisation encoding is performed.

The receiver of Figure 5 operates identically to the receiver of Figure 4.

The polarisation coder 20 generates a polarisation shift key modulated signal, and the polarisation detector demodulates the thus modulated signal.

Thus it can be appreciated that in the transmitter it does not affect the system operation as to the order in which the modulation and the polarisation encoding takes place. However, in the receiver it is essential that the demodulation is performed before the polarisation detection. If the polarisation detection were performed prior to demodulation, then the amplitude of the light signal may be attenuated to such a degree that the demodulation could not be reliably carried out.

The principle of the present invention extends to other modulation techniques such as frequency shift keying and phase shift keying.

Each of the wavelengths of light which is polarised at both 0° and 90° can in turn be multiplexed in a wavelength division multiplexed (WDM) system.

To minimise interference between wavelengths, the polarisation angle values for encoding in individual wavelengths can be optimised for minimum inter-wavelength interference.

An important requirement for the use of polarisation encoding according to the present invention is that throughout the entire communication path all the optical elements must be of the polarisation-maintaining type. The optical fibre used to implement the optical link must therefore itself be of the polarisation-maintaining type, such Lucent Technologies True Wave Fibre.

In the above discussion, polarisation angles of 0° and 90° are referred to. Reference to these angles actually is reference to the relative angle. There is no absolute standard for the angle, so "0°" can in fact be anywhere, and 90° means 90° relative to the angle of the other polarisation state. This is known, also, as orthogonal polarisation.

## Claims

1. A method of transmitting information on a light signal, comprising:
generating a light signal (2, 34); and adjusting the polarisation value of the light signal (8, 20) to one of at least two values in dependence on one of at least two values of information to be transmitted, **characterised by** the step of additionally modulating (32, 33) the light signal in dependence on one of at least two values of further information to be transmitted.

2. The method of claim 1 wherein the additional modulation step comprises one of either amplitude modulation (33), frequency shift key modulation, or phase shift key modulation.

3. An optical transmitter comprising: a light source (2, 34) for generating a light signal; and polarisation adjustment means (8, 20) connected to receive the light signal and an information signal having one of at least two values, wherein the polarisation value of the light signal is adjusted to one of at least two values in dependence on the information signal, **characterised in that** the optical transmitter further comprises modulation means (32, 33) adapted to modulate the light signal in dependence on a further information signal.

4. The optical transmitter of claim 3 wherein the additional modulation means is one of either an amplitude modulation means (33), a frequency shift key modulation means, or a phase shift key modulation means.

5. A method of receiving information, the information having been transmitted by means of a light signal having one of at least two polarisation values representing one of at least two information values, the method comprising detecting the polarisation value (4) of the transmitted light signal, **characterised in that** the transmitted signal is additionally modulated in dependence on further information values, the method further comprising the step of demodulating (40, 44) the transmitted light signal prior to detecting (4) the polarisation value of the transmitted signal.

6. An optical receiver for receiving a light signal having one of at least two polarisation values, each polarisation value representing one of at least two values of information, comprising a polarisation detector (4) connected to receive the light signal and for detecting the polarisation value of the light signal, **characterised in that** the light signal is additionally modulated in dependence upon further information, the optical receiver further comprising a demodulator (40, 44) connected prior to the polarisation detector (4).

## Patentansprüche

1. Verfahren zur Übertragung von Informationen auf einem Lichtsignal, mit den folgenden Schritten:
Erzeugen eines Lichtsignals (2, 34) und Einstellen des Polarisationswerts des Lichtsignals (8, 20) auf mindestens einen von zwei Werten, abhängig von einem von mindestens zwei zu übertragenden Informationswerten, **gekennzeichnet durch** den Schritt des zusätzlichen Modulierens (32, 33) des Lichtsignals abhängig von einem von mindestens zwei Werten von weiteren zu übertragenden Informationen.

2. Verfahren nach Anspruch 1, wobei der zusätzliche Modulationsschritt entweder Amplitudenmodulation (33), Frequenzsprungmodulation oder Phasensprungmodulation umfaßt.

3. Optischer Sender, umfassend: eine Lichtquelle (2, 34) zum Erzeugen eines Lichtsignals und ein Polarisationseinstellmittel (8, 20), das so geschaltet ist, daß es das Lichtsignal und ein Informationssignal mit einem von mindestens zwei Werten empfängt, wobei der Polarisationswert des Lichtsignals abhängig von dem Informationssignal auf einen von mindestens zwei Werten eingestellt wird, **dadurch gekennzeichnet, daß** der optische Sender weiterhin ein Modulationsmittel (32, 33) umfaßt, das so ausgelegt ist, daß es das Lichtsignal abhängig von einem weiteren Informationssignal moduliert.

4. Optischer Sender nach Anspruch 3, wobei das zusätzliche Modulationsmittel entweder ein Amplitudenmodulationsmittel (33), ein Frequenzsprungmodulationsmittel oder ein Phasensprungmodulationsmittel ist.

5. Verfahren zum Empfangen von Informationen, wobei die Informationen mittels eines Lichtsignals mit einem von mindestens zwei Polarisationswerten, die einen von mindestens zwei Informationswerten darstellen, gesendet wurden, wobei das Verfahren das Erkennen des Polarisationswerts (4) des übertragenen Lichtsignals umfaßt, **dadurch gekennzeichnet, daß** das übertragene Signal zusätzlich abhängig von weiteren Informationswerten moduliert wird, wobei das Verfahren weiterhin den Schritt des Demodulierens (40, 44) des übertragenen Lichtsignals vor dem Erkennen (4) des Polarisationswerts des übertragenen Signals umfaßt.

6. Optischer Empfänger zum Empfangen eines Lichtsignals mit einem von mindestens zwei Polarisationswerten, wobei jeder Polarisationswert einen von mindestens zwei Informationswerten darstellt, umfassend einen Polarisationsdetektor (4), der so geschaltet ist, daß er das Lichtsignal empfängt und den Polarisationswert des Lichtsignals erkennt, **dadurch gekennzeichnet, daß** das Lichtsignal zusätzlich abhängig von weiteren Informationen moduliert wird, wobei der optische Empfänger weiterhin einen Demodulator (40, 44) umfaßt, der vor den Polarisationsdetektor (4) geschaltet ist.

## Revendications

1. Procédé de transmission d'informations sur un signal lumineux, comprenant :
la génération d'un signal lumineux (2, 34) ; et le réglage de la valeur de polarisation du signal lumineux (8, 20) sur l'une d'au moins deux valeurs en fonction d'une d'au moins deux valeurs d'informations à transmettre, **caractérisé par** l'étape de modulation supplémentaire (32, 33) du signal lumineux en fonction d'une d'au moins deux valeurs d'autres informations à transmettre.

2. Procédé selon la revendication 1, dans lequel l'étape de modulation supplémentaire comprend l'une de la modulation d'amplitude (33), de la modulation par déplacement de fréquence, ou de la modulation par déplacement de phase.

3. Emetteur optique comprenant : une source de lumière (2, 34) pour générer un signal lumineux ; et un moyen de réglage de polarisation (8, 20) connecté pour recevoir le signal lumineux et un signal d'information ayant l'une d'au moins deux valeurs, dans lequel la valeur de polarisation du signal lumineux est réglée sur l'une d'au moins deux valeurs en fonction du signal d'information, **caractérisé en ce que** l'émetteur optique comprend en outre un moyen de modulation (32, 33) adapté en vue de moduler le signal lumineux en fonction d'un signal d'autres informations.

4. Emetteur optique selon la revendication 3, dans lequel le moyen de modulation supplémentaire est l'un d'un moyen de modulation d'amplitude (33), d'un moyen de modulation par déplacement de fréquence, ou d'un moyen de modulation par déplacement de phase.

5. Procédé de réception d'informations, les informations ayant été transmises au moyen d'un signal lumineux ayant l'une d'au moins deux valeurs de polarisation représentant l'une d'au moins deux valeurs d'informations, le procédé comprenant la détection de la valeur de polarisation (4) du signal lumineux transmis, **caractérisé en ce que** le signal transmis est modulé de plus en fonction de valeurs d'autres informations, le procédé comprenant en outre l'étape de démodulation (40, 44) du signal lumineux transmis avant la détection (4) de la valeur de polarisation du signal transmis.

6. Récepteur optique pour recevoir un signal lumineux ayant l'une d'au moins deux valeurs de polarisation, chaque valeur de polarisation représentant l'une d'au moins deux valeurs d'informations, comprenant un détecteur de polarisation (4) connecté pour recevoir le signal lumineux et pour détecter la valeur de polarisation du signal lumineux, **caractérisé en ce que** le signal lumineux est de plus modulé en fonction d'autres informations, le récepteur optique comprenant en outre un démodulateur (40, 44) connecté avant le détecteur de polarisation (4).
